# FASCICULE DE BREVET EUROPEEN

(11) **EP 2 539 638 B1**
(45) Date de publication et mention de la délivrance du brevet: **16.10.2019**
(21) Numéro de dépôt: 11707380.9
(22) Date de dépôt: 24.02.2011
(51) Int. Cl.: F23R 3/04, F23R 3/28, F23R 3/14, F23R 3/24, F23R 3/34

(54) **SYSTEME D'INJECTION POUR CHAMBRE DE COMBUSTION DE TURBOMACHINE, COMPRENANT DES MOYENS D'INJECTION D'AIR AMELIORANT LE MELANGE AIR-CARBURANT**
INJEKTIONSSYSTEM FÜR EINE TURBINENMOTORBRENNKAMMER MIT LUFTINJEKTIONSVORRICHTUNG FÜR VERBESSERTES LUFT-KRAFTSTOFF-GEMISCH
INJECTION SYSTEM FOR A TURBINE ENGINE COMBUSTION CHAMBER, INCLUDING AIR INJECTION MEANS IMPROVING THE AIR-FUEL MIXTURE

(30) Priorité: 26.02.2010 FR 1051393
(43) Date de publication de la demande: 02.01.2013
(73) Titulaire: Safran Aircraft Engines, 75015 Paris (FR)
(72) Inventeur: HERNANDEZ, Didier, Hippolyte, F-77720 Quiers (FR); NOEL, Thomas, Olivier, Marie, F-94300 Vincennes (FR); RULLAUD, Matthieu, François, F-77430 Champagne Sur Seine (FR)
(74) Mandataire: Ilgart, Jean-Christophe
(86) Numéro de dépôt international: PCT/EP2011/052750
(87) Numéro de publication internationale: WO 2011/104304

(56) Documents cités:
- EP-A1- 1 806 535
- EP-A2- 2 093 489
- WO-A1-2009/126534
- WO-A2-2009/126485
- GB-A- 2 456 753
- US-A- 5 165 241
- US-A1- 2005 130 089

## Description

### DOMAINE TECHNIQUE

La présente invention se rapporte au domaine des chambres de combustion des turbomachines, en particulier d'aéronef, et concerne plus particulièrement les systèmes d'injection d'air et de carburant dans ces chambres de combustion.

L'invention concerne plus précisément les systèmes d'injection à double circuit d'injection de carburant, qui comprennent un injecteur central, couramment appelé injecteur pilote, délivrant un débit de carburant permanent optimisé pour les bas régimes, ainsi qu'un injecteur annulaire périphérique, parfois appelé injecteur principal, qui délivre un débit de carburant intermittent optimisé pour les hauts régimes, cet injecteur périphérique étant par exemple du type couramment appelé multipoint.

Ces systèmes d'injection ont été développés pour permettre aux chambres de combustion de fonctionner avec un mélange d'air et de carburant appauvri en carburant, et plus généralement pour une meilleure adaptation de l'injection d'air et de carburant aux différents régimes de fonctionnement des chambres de combustion, afin de réduire leur consommation en carburant et leur émission de polluants tels que les oxydes d'azote et les fumées.

### ÉTAT DE LA TECHNIQUE ANTÉRIEURE

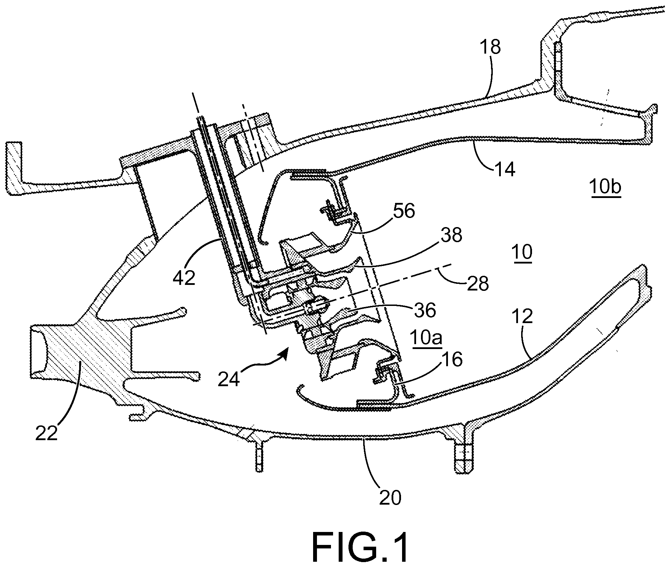

Comme l'illustre la figure 1, une chambre annulaire de combustion 10 dans une turbomachine comprend habituellement deux parois annulaires, respectivement interne 12 et externe 14, qui la délimitent et qui sont raccordées en amont à une paroi annulaire de fond de chambre 16, et en aval respectivement à un carter externe 18 de la turbomachine et à une virole interne 20 reliée à un diffuseur 22 agencé en amont de la chambre de combustion et destiné à diffuser dans cette chambre de l'air comprimé provenant d'un compresseur de la turbomachine (non visible sur la figure 1), de manière bien connue.

Le fond de chambre 16 comporte en général des orifices régulièrement répartis autour de l'axe de la chambre et dans lesquels sont montés des systèmes d'injection d'air et de carburant 24, chacun destiné à produire une flamme dans la chambre de combustion.

Une chambre de combustion 10 se divise habituellement en une zone amont 10a, dite zone primaire, dédiée à la combustion des flammes issues des systèmes d'injection 24 du fond 16 de la chambre, et une zone aval 10b, dite zone de dilution, dédiée au refroidissement et à la dilution des gaz de combustion dans de l'air frais provenant d'orifices ménagés dans les parois annulaires 12 et 14 délimitant la chambre de combustion.

Les systèmes d'injection 24 de la chambre de combustion 10 représentée sur la figure 1 sont du type comprenant un injecteur central, appelé aussi injecteur pilote, ainsi qu'un injecteur annulaire périphérique, appelé aussi injecteur principal, ce dernier étant ici du type multipoint.

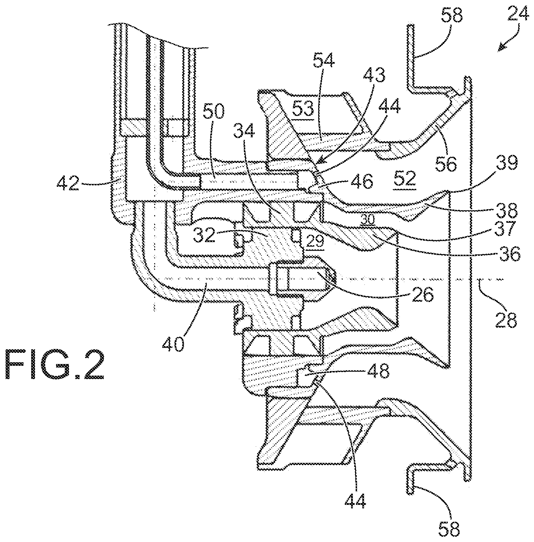

Comme le montre plus précisément la figure 2 qui est une vue à plus grande échelle du système d'injection 24 représenté sur la figure 1, l'injecteur de carburant central 26 est formé d'une buse débouchant sur un axe central 28 du système, qui constitue sensiblement un axe de symétrie pour les pièces de révolution composant le système d'injection 24.

Cet injecteur central 26 est habituellement associé à deux canaux d'admission d'air, parmi lesquels un canal interne 29 dans lequel débouche l'injecteur central 26 de sorte que le carburant pulvérisé par cet injecteur puisse être immédiatement mélangé à l'air admis dans ce canal, et un canal annulaire externe 30 qui débouche en aval dans le système d'injection pour permettre un enrichissement ultérieur en air du mélange d'air et de carburant.

Les deux canaux d'admission d'air 29 et 30 précités sont en général traversés par des ailettes obliques 32 et 34 destinées à imprimer au flux d'air les traversant un mouvement de giration autour de l'axe central du système d'injection 24 pour favoriser l'homogénéisation du mélange d'air et de carburant dans le système d'injection.

Chacun des deux canaux d'admission d'air 29 et 30 précités est couramment appelé vrille, et est en général délimité extérieurement par une paroi annulaire 36, respectivement 38, à profil interne convergent-divergent, parfois appelée venturi, et destinée à guider une partie du carburant pulvérisé par l'injecteur central 26 vers l'aval par effet venturi et à pulvériser ce carburant au niveau d'une lèvre 37, respectivement 39, formée à l'extrémité aval de ladite paroi, d'une manière bien connue.

Dans l'exemple représenté sur la figure 2, les deux canaux d'admission d'air 29 et 30, ainsi que les parois annulaires 36 et 38 les délimitant, s'étendent sensiblement selon l'axe 28 du système d'injection.

L'injecteur de carburant central 26 est habituellement alimenté par un conduit 40 partiellement logé dans un bras 42 porté par le carter externe 18 de la chambre de combustion (figure 1).

Par ailleurs, l'injecteur de carburant périphérique ou multipoint 43 est formé d'une rangée annulaire d'orifices d'éjection de carburant 44 qui sont par exemple ménagés dans une portion amont tronconique 46 de la paroi 38 délimitant le passage annulaire externe 30 (figure 2).

Les orifices d'éjection de carburant 44 de l'injecteur périphérique 43 communiquent avec une cavité annulaire de distribution 48, alimentée en carburant par un conduit 50 partiellement logé dans le bras 42, et ces orifices d'éjection de carburant 44 débouchent dans un canal annulaire périphérique 52 pourvu d'un espace annulaire 53 d'admission d'un flux d'air destiné à se mélanger dans ledit canal 52 à du carburant issu dudit injecteur périphérique 43.

L'espace annulaire d'admission d'air 53 précité est traversé par des ailettes obliques 54 destinées à imprimer au flux d'air les traversant un mouvement de giration autour de l'axe central du système d'injection 24.

Le canal annulaire périphérique 52 est délimité intérieurement par la paroi annulaire 38 et extérieurement par un bol 56 évasé vers l'aval et portant des moyens 58 permettant le montage du système d'injection 24 dans le fond 26 de la chambre de combustion.

Dans l'exemple représenté sur les figures 1 et 2, l'espace annulaire d'admission d'air 53 a une forme tronconique et est délimité intérieurement par la portion tronconique 46 de la paroi annulaire 38 de manière à présenter une ouverture tournée radialement vers l'extérieur.

En fonctionnement, le carburant pénètre dans le canal annulaire périphérique 52 par les orifices d'éjection de carburant 44 de l'injecteur périphérique 43 et ce carburant rencontre alors le flux d'air qui circule dans le canal 52, ce qui favorise l'atomisation de ce carburant, c'est-à-dire la pulvérisation de ce carburant sous forme de fines gouttelettes.

D'une manière générale, dans les systèmes d'injection comprenant deux circuits d'injection de carburant, tels par exemple que le système d'injection 24 décrit ci-dessus, l'injecteur central ou pilote 26 délivre un débit de carburant qui est sensiblement permanent à tous les régimes de fonctionnement de la chambre de combustion et est optimisé pour les bas régimes, tandis que l'injecteur périphérique ou principal 43 délivre à fort régime un débit de carburant élevé qui est optimisé pour ce type de régime, et ne délivre pas de carburant à bas régime.

Toutefois, les chambres de combustion équipées de systèmes d'injection du type décrit ci-dessus présentent des niveaux relativement élevés d'émission de certains polluants, tels que le monoxyde de carbone ou des hydrocarbures, et cela plus particulièrement aux régimes de fonctionnement intermédiaires, notamment au régime dit d'approche, lorsque la poussée développée est égale à 30% environ de la poussée maximale.

Les niveaux d'émission de polluants dépendent de la qualité de la combustion du carburant dans ces chambres de combustion, et donc notamment de la qualité de l'atomisation du carburant provenant des injecteurs périphériques dans les systèmes d'injection ainsi que de l'évaporation de ces gouttelettes de carburant.

Or, l'atomisation et l'évaporation du carburant se révèlent moins efficaces aux régimes de fonctionnement intermédiaires, du fait notamment que la pression d'éjection du carburant par les injecteurs périphériques est plus basse à ces régimes.

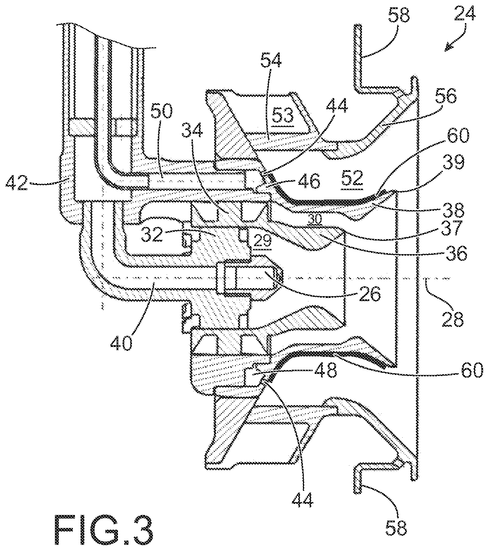

Pour la même raison, comme illustré sur la figure 3, une partie du carburant provenant des injecteurs périphériques est susceptible de ruisseler en sortie de ces injecteurs sous la forme d'une nappe de liquide, ou sous la forme de filets 60 de liquide dans le cas particulier des injecteurs du type multipoint.

D'une manière générale, une amélioration de l'atomisation et de l'évaporation du carburant provenant des injecteurs périphériques dans les systèmes d'injection à double circuit d'injection de carburant s'avère souhaitable à tous les régimes de fonctionnement afin de réduire davantage les niveaux d'émission de substances nocives pour l'environnement telles que les oxydes d'azote, le monoxyde de carbone et les hydrocarbures.

Outre l'état de l'art exposé ci-avant, les documents EP2093489 A2 et GB 2456753 A sont également pertinents par rapport à l'objet de l'invention.

### EXPOSÉ DE L'INVENTION

L'invention a notamment pour but d'apporter une solution simple, économique et efficace à une partie au moins de ces problèmes, permettant d'éviter les inconvénients précités.

L'invention propose à cet effet un système d'injection d'air et de carburant pour fond de chambre annulaire de combustion de turbomachine, comprenant au moins deux dispositifs coaxiaux d'injection de carburant parmi lesquels un injecteur central débouchant dans un canal central prévu pour l'admission d'un flux d'air destiné à se mélanger dans ledit système d'injection à du carburant provenant dudit injecteur central, ainsi qu'un injecteur annulaire périphérique comprenant au moins un orifice d'éjection de carburant ménagé dans une paroi annulaire et débouchant dans un canal annulaire périphérique séparé dudit canal central par ladite paroi annulaire et pourvu d'un espace annulaire d'admission d'un flux d'air destiné à se mélanger dans ce canal périphérique à du carburant issu de l'injecteur périphérique.

Selon l'invention, le système d'injection comprend en outre une pluralité d'orifices d'éjection d'air traversant la paroi annulaire précitée en aval du ou des orifices d'éjection de carburant par référence à l'écoulement dudit flux d'air, pour une injection additionnelle d'air provenant dudit canal central dans le canal périphérique précité.

L'amont et l'aval sont ici définis le long de l'écoulement du flux d'air dans le canal annulaire périphérique.

L'injection additionnelle d'air dans le flux d'air admis dans le canal annulaire périphérique, en aval de l'injection de carburant par l'injecteur périphérique, permet d'améliorer considérablement la qualité de l'atomisation du carburant et de favoriser ainsi également l'évaporation des gouttelettes de ce carburant.

Les orifices d'éjection d'air peuvent prélever de l'air directement dans le flux d'air s'écoulant dans le canal central, et cela d'autant plus efficacement que l'air s'écoulant dans ce canal central a subi lors de son admission dans ce canal une perte de charge inférieure à celle subie par l'air admis dans le canal annulaire périphérique.

Cette configuration présente l'avantage supplémentaire d'être particulièrement simple et peu encombrante selon la direction radiale.

Les orifices d'éjection d'air peuvent chacun présenter un axe d'éjection sensiblement perpendiculaire à un plan tangent à la paroi annulaire précitée au niveau dudit orifice, et donc aussi perpendiculaire à la direction locale d'écoulement du flux d'air en sortie de l'orifice.

En variante, chaque orifice peut présenter un axe d'éjection incliné dans un plan axial et/ou dans un plan transversal par rapport à une direction perpendiculaire au plan tangent à la paroi annulaire précitée au niveau dudit orifice.

L'injecteur périphérique peut comporter un unique orifice annulaire d'éjection de carburant prévu pour délivrer du carburant sous la forme d'une nappe annulaire.

En variante, dans un mode de réalisation préféré de l'invention, l'injecteur périphérique comprend une pluralité d'orifices d'éjection de carburant ménagés dans la paroi annulaire précitée et débouchant dans le canal annulaire périphérique.

Dans ce cas, chacun desdits orifices d'éjection d'air débouche de préférence sur le tracé prédéterminé d'un filet de carburant susceptible, en fonctionnement, de ruisseler sur la paroi annulaire précitée depuis un orifice d'éjection de carburant correspondant.

Le tracé suivi par le carburant liquide susceptible de ruisseler depuis chacun des orifices d'éjection de carburant dépend de la géométrie du système d'injection, en particulier de la géométrie de la paroi annulaire précitée et de la géométrie de l'écoulement du flux d'air le long de cette paroi, de sorte que ce tracé peut être aisément déterminé par des méthodes expérimentales ou par des simulations numériques.

L'injection d'air sur les tracés respectifs des filets de carburant provenant d'une partie au moins des orifices d'éjection de carburant permet de favoriser le décollement de ce carburant et le mélange de celui-ci au flux d'air.

Préférentiellement, le nombre d'orifices d'éjection de carburant de l'injecteur périphérique est égal au nombre d'orifices d'éjection d'air de sorte qu'à chaque orifice d'éjection de carburant correspond un orifice d'éjection d'air.

D'une manière connue en soi, le système d'injection comprend avantageusement des ailettes obliques, qui traversent l'espace annulaire d'admission dudit flux d'air pour imprimer un mouvement de giration à ce flux d'air, et dont l'orientation détermine le tracé des filets de carburant précités.

L'orientation des ailettes détermine en effet la géométrie de l'écoulement du flux d'air dans le canal annulaire périphérique, notamment le long de la paroi annulaire précitée.

L'espace annulaire d'admission dudit flux d'air a de préférence une forme tronconique de sorte que le diamètre de la section transversale moyenne de cet espace diminue de l'amont vers l'aval par référence à l'écoulement du flux d'air.

Cet espace annulaire présente ainsi une ouverture tournée radialement vers l'extérieur, ce qui peut faciliter l'éjection d'air dans le canal annulaire périphérique en accroissant la perte de charge subie par le flux d'air dans l'espace annulaire d'admission de ce flux, comme cela apparaîtra plus clairement dans ce qui suit.

Selon l'invention, le canal central précité est un canal annulaire externe qui est ménagé autour d'une paroi annulaire le séparant d'un canal interne dans lequel débouche l'injecteur central. Dans un mode de réalisation de l'invention, le canal annulaire externe est traversé par des ailettes obliques destinées à imprimer un mouvement de giration au flux d'air admis dans ce canal, d'une manière connue en soi.

Selon l'invention, ladite paroi annulaire, qui sépare le canal annulaire externe et le canal interne, présente sur sa face interne un profil convergent-divergent destiné à l'aspiration par effet venturi d'un film de carburant provenant de l'injecteur central, et ladite paroi annulaire présente à son extrémité aval une lèvre annulaire destinée à la pulvérisation du film de carburant précité sous l'effet d'un écoulement du flux d'air admis dans le canal annulaire externe, d'une manière connue en soi.

L'invention concerne aussi une chambre annulaire de combustion pour turbomachine comprenant au moins un système d'injection du type décrit ci-dessus.

L'invention concerne encore une turbomachine, comprenant une chambre annulaire de combustion du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une demi-vue schématique en coupe axiale d'une chambre annulaire de combustion de turbomachine comprenant des systèmes d'injection d'un type connu ;
- les figures 2 et 3, déjà décrites, sont des vues schématiques en coupe axiale à plus grande échelle illustrant un système d'injection de la chambre de combustion de la figure 1 ;
- la figure 4 est une demi-vue schématique partielle en coupe axiale d'un système d'injection pour chambre annulaire de combustion de turbomachine selon un mode de réalisation préféré de l'invention ;
- la figure 5 est une vue schématique partielle en perspective et à plus grande échelle du système d'injection de la figure 4, qui illustre plus particulièrement un orifice d'éjection d'air de ce système d'injection ;
- les figures 6 et 7 sont des vues semblables à la figure 5 et illustrent d'autres conformations d'orifices d'éjection d'air possibles dans un système d'injection conforme au mode de réalisation préféré de l'invention.

Dans l'ensemble de ces figures, des références identiques désignent des éléments identiques ou analogues.

### EXPOSÉ DÉTAILLÉ DE MODES DE RÉALISATION PREFERES

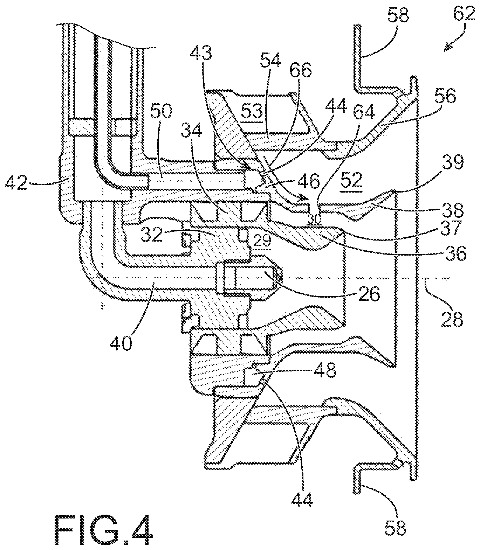

La figure 4 représente un système d'injection 62 conforme à un mode de réalisation préféré de la présente invention et destiné à équiper une chambre annulaire de combustion dans une turbomachine.

Ce système d'injection 62 est d'un type semblable au système d'injection 24 déjà décrit, mais diffère de ce dernier du fait qu'il comprend une pluralité d'orifices d'éjection d'air 64 ménagés dans la paroi annulaire 38 et régulièrement répartis autour de l'axe 28 de ce système d'injection 62.

Chaque orifice d'éjection d'air 64 communique avec le canal annulaire externe 30 associé à l'injecteur central 26, et débouche dans le canal annulaire périphérique 52 en aval des orifices d'éjection de carburant 44 de l'injecteur périphérique 43, la direction aval étant ici déterminée par référence à la direction locale 66 de l'écoulement de l'air le long de la paroi annulaire 38 dans le canal annulaire périphérique 52.

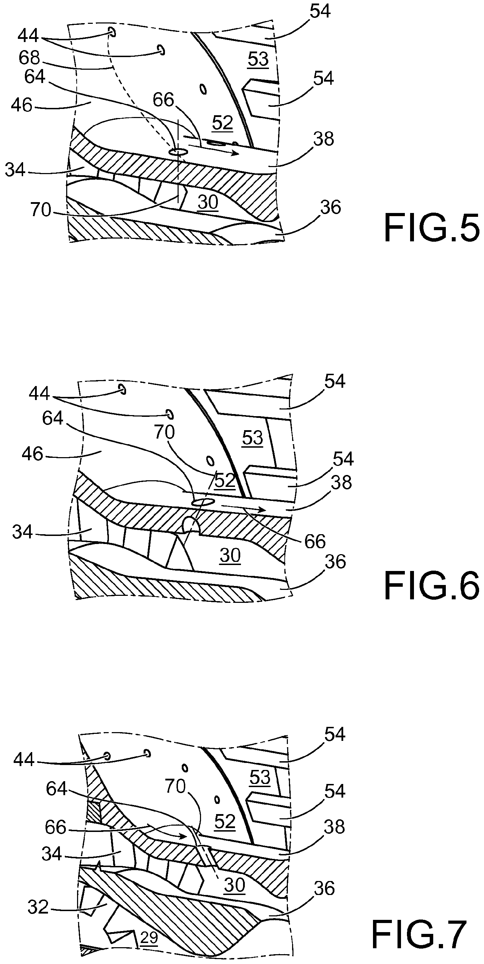

Comme le montre la figure 5, chaque orifice d'éjection d'air 64 est ménagé sur le tracé 68 d'un filet de liquide susceptible en fonctionnement de ruisseler depuis un orifice d'éjection de carburant 44 correspondant.

De plus, chaque orifice d'éjection d'air 64 présente un axe d'éjection 70 sensiblement perpendiculaire au plan tangent à la paroi annulaire 38 au niveau de cet orifice, et donc à la direction locale 66 de l'écoulement de l'air le long de cette paroi.

En fonctionnement, dans une turbomachine comprenant une chambre de combustion équipée de systèmes d'injection 62 du type décrit ci-avant, la partie de l'air provenant du diffuseur 22 (figure 1) qui pénètre dans l'espace annulaire d'admission 53 du canal annulaire périphérique 52 subit une perte de charge relativement élevée étant donné que l'ouverture de cet espace d'admission 53 est tournée radialement vers l'extérieur, tandis que la partie de cet air qui pénètre dans le canal annulaire externe 30 associé à l'injecteur central 26 subit une perte de charge relativement basse.

L'air s'écoulant dans le canal annulaire externe 30 associé à l'injecteur central 26 tend donc à circuler dans les orifices d'éjection d'air 64 et à pénétrer dans le canal annulaire périphérique 52.

L'éjection additionnelle d'air ainsi obtenue tend à décoller les filets de carburant liquide ruisselant éventuellement sur la paroi annulaire 38 en sortie des orifices d'éjection de carburant 44.

Cette injection additionnelle d'air permet de surcroît d'améliorer l'atomisation du carburant en suspension dans le flux d'air s'écoulant dans le canal annulaire périphérique, ainsi que l'évaporation des gouttelettes de ce carburant, comme expliqué ci-dessus.

En variante, chaque orifice d'éjection d'air 64 peut présenter un axe d'éjection 70 incliné par rapport à la direction perpendiculaire au plan tangent à la paroi annulaire 38 au niveau de cet orifice, c'est-à-dire incliné par rapport à la direction de l'axe 70 de la figure 5, cette inclinaison pouvant par exemple être définie dans un plan transversal comme sur la figure 6 et/ou dans un plan axial comme sur la figure 7, lorsque cela permet d'améliorer l'efficacité de l'injection additionnelle d'air.

## Revendications

1. Système d'injection d'air et de carburant (62) pour fond (16) de chambre annulaire de combustion de turbomachine, comprenant un canal interne (29), un canal annulaire externe (30), un canal annulaire périphérique (52), deux parois annulaires (36, 38) et au moins deux dispositifs coaxiaux d'injection de carburant (26, 43), parmi lesquels un injecteur central (26) associé à deux canaux d'admission d'air, à savoir le canal interne (29) dans lequel débouche l'injecteur central (26) de sorte que le carburant pulvérisé par l'injecteur central (26) puisse être immédiatement mélangé à l'air admis dans le canal interne (29), et le canal annulaire externe (30) qui est ménagé autour de la paroi annulaire (36) le séparant du canal interne (29) et qui débouche en aval dans le système d'injection pour permettre un enrichissement ultérieur en air du mélange d'air et de carburant, ainsi qu'un injecteur annulaire périphérique (43) comprenant au moins un orifice d'éjection de carburant (44) ménagé dans la paroi annulaire (38) et débouchant dans le canal annulaire périphérique (52) séparé dudit canal externe (30) par ladite paroi annulaire (38) et pourvu d'un espace annulaire (53) d'admission d'un flux d'air destiné à se mélanger dans ledit canal annulaire périphérique (52) à du carburant issu dudit injecteur périphérique (43), dans lequel ladite paroi annulaire (36), qui sépare le canal annulaire externe (30) et ledit canal interne (29), présente sur sa face interne un profil convergent-divergent destiné à l'aspiration par effet venturi d'un film de carburant provenant dudit injecteur central (26), et ladite paroi annulaire (36) présente à son extrémité aval une lèvre annulaire (37) destinée à la pulvérisation dudit film de carburant sous l'effet d'un écoulement du flux d'air admis dans le canal annulaire externe (30), ledit système d'injection (62) étant **caractérisé en ce qu'**il comprend en outre une pluralité d'orifices d'éjection d'air (64) traversant ladite paroi annulaire (38) en aval dudit orifice d'éjection de carburant (44) par référence à l'écoulement de ce dernier flux d'air, pour une injection additionnelle d'air provenant dudit canal externe (30) dans ledit canal annulaire périphérique (52) .

2. Système d'injection selon la revendication 1, **caractérisé en ce que** ledit injecteur annulaire périphérique (43) comprend une pluralité d'orifices d'éjection de carburant (44) ménagés dans ladite paroi annulaire (38) et débouchant dans ledit canal annulaire périphérique (52), et **en ce que** chacun desdits orifices d'éjection d'air (64) débouche sur le tracé prédéterminé d'un filet de carburant (60) susceptible, en fonctionnement, de ruisseler sur ladite paroi annulaire (38) depuis un orifice d'éjection de carburant (44) correspondant de ladite pluralité d'orifices d'éjection de carburant (44).

3. Système d'injection selon la revendication 2, **caractérisé en ce qu'**il comprend des ailettes obliques (54), qui traversent ledit espace annulaire (53) d'admission dudit flux d'air, destiné à se mélanger dans ledit canal annulaire périphérique (52) au carburant issu dudit injecteur périphérique (43), pour imprimer un mouvement de giration à ce dernier flux d'air, et dont l'orientation détermine le tracé desdits filets de carburant (60).

4. Système d'injection selon l'une quelconque des revendications 1 à 3, **caractérisé en ce que** ledit espace annulaire (53) d'admission dudit flux d'air, destiné à se mélanger dans ledit canal annulaire périphérique (52) au carburant issu dudit injecteur périphérique (43), a une forme tronconique de sorte que le diamètre de la section transversale moyenne dudit espace annulaire (53) diminue de l'amont vers l'aval par référence à l'écoulement de ce dernier flux d'air.

5. Système d'injection selon l'une quelconque des revendications 1 à 4, **caractérisé en ce que** ledit canal annulaire externe (30) est traversé par des ailettes obliques (34) destinées à imprimer un mouvement de giration au flux d'air admis dans ce canal (30) .

6. Chambre annulaire de combustion pour turbomachine, **caractérisée en ce qu'**elle comprend au moins un système d'injection (62) selon l'une quelconque des revendications précédentes.

7. Turbomachine, **caractérisée en ce qu'**elle comprend une chambre annulaire de combustion selon la revendication 6.

## Patentansprüche

1. Luft und Brennstoff-Einspritzsystem (62) für den Boden (16) einer ringförmigen Turbotriebwerks-Brennkammer, mit einem inneren Kanal (29), einem äußeren Ringkanal (30), einem am Außenumfang umlaufenden Ringkanal (52), zwei ringförmigen Wänden (36, 38) und mindestens zwei koaxialen Brennstoff-Einspritzvorrichtungen (26, 43), darunter
einer zentralen Einspritzdüse (26), die mit zwei Luftzufuhrkanälen verbunden ist, und zwar mit dem inneren Kanal (29), in den die zentrale Einspritzdüse (26) mündet, dergestalt dass der durch die Einspritzdüse (26) zerstäubte Brennstoff unmittelbar mit der Luft vermischt werden kann, die in den inneren Kanal (29) zugeführt wird, und mit dem äußeren Ringkanal (30), der um die ringförmige Wand (36) herum ausgeführt ist, die ihn von dem inneren Kanal (29) trennt, und der in Strömungsrichtung danach in das Einspritzsystem mündet, um eine nachträgliche Anreicherung des Brennstoff-Luft-Gemischs mit Luft zu ermöglichen, sowie
einer am Außenumfang umlaufenden ringförmigen Einspritzdüse (43), die mindestens eine Brennstoff-Ausstoßöffnung (44) aufweist, die in der ringförmigen Wand (38) ausgeführt ist und in den am Außenumfang umlaufenden Ringkanal (52) mündet, der von dem genannten äußeren Ringkanal (30) durch diese ringförmige Wand (38) getrennt ist und mit einem ringförmigen Zwischenraum (53) für die Zufuhr eines Luftstroms versehen ist, welcher dazu vorgesehen ist, sich in diesem am Außenumfang umlaufenden Ringkanal (52) mit Brennstoff aus der genannten am Außenumfang umlaufenden ringförmigen Einspritzdüse (43) zu vermischen,
wobei die ringförmige Wand (36), die den äußeren Ringkanal (30) und den genannten inneren Kanal (29) voneinander trennt, an ihrer Innenseite ein konvergierenddivergierendes Profil aufweist, das dazu vorgesehen ist, durch den Venturi-Effekt einen von der zentralen Einspritzdüse (26) kommenden Brennstofffilm anzusaugen, und wobei diese ringförmige Wand (36) an ihrem stromabwärts gelegenen Ende eine ringförmige Lippe (37) aufweist, die zur Zerstäubung des genannten Brennstofffilms unter der Einwirkung eines Fließens des in den äußeren Ringkanal (30) zugeführten Luftstroms gedacht ist,
**dadurch gekennzeichnet,**
**dass** es ferner eine Vielzahl von Luft-Ausstoßöffnungen (64) enthält, die, bezogen auf die Strömungsrichtung dieses letzteren Luftstroms, in Strömungsrichtung hinter der genannten Brennstoff-Ausstoßöffhung (44) durch die genannte ringförmige Wand (38) führen, mit dem Zweck einer zusätzlichen Einspritzung von Luft aus dem genannten äußeren Ringkanal (30) in den genannten am Außenumfang umlaufenden Ringkanal (52).

2. Einspritzsystem nach Anspruch 1,
**dadurch gekennzeichnet,**
**dass** die genannte am Außenumfang umlaufende ringförmige Einspritzdüse (43) eine Vielzahl von Brennstoff-Ausstoßöffnungen (44) enthält, die in der genannten ringförmigen Wand (38) ausgeführt sind und in den genannten am Außenumfang umlaufenden Ringkanal (52) münden, und dass jede der genannten Luft-Ausstoßöffnungen (64) auf die festgelegte Bahn eines Brennstoff-Fadens (60) mündet, der in Betrieb von einer jeweiligen Brennstoff-Ausstoßöffnung (44) der genannten Vielzahl von Brennstoff-Ausstoßöffhungen (44) aus über die genannte ringförmige Wand (38) rinnen kann.

3. Einspritzsystem nach Anspruch 2,
**dadurch gekennzeichnet,**
**dass** es schrägstehende Rippen (54) aufweist, die quer durch den genannten ringförmigen Zwischenraum (53) für die Zufuhr des genannten Luftstroms führen, der sich in dem genannten am Außenumfang umlaufenden Ringkanal (52) mit dem aus der am Außenumfang umlaufenden ringförmigen Einspritzdüse (43) kommenden Brennstoff vermischen soll, dergestalt dass dieser Luftstrom in eine Drehbewegung versetzt wird, und wobei die Ausrichtung dieser Rippen die Bahn der genannten Brennstoff-Fäden (60) bestimmt.

4. Einspritzsystem nach einem der Ansprüche 1 bis 3,
**dadurch gekennzeichnet,**
**dass** der genannte ringförmige Zwischenraum (53) für die Zufuhr des genannten Luftstroms, der sich in dem genannten am Außenumfang umlaufenden Ringkanal (52) mit dem aus der am Außenumfang umlaufenden ringförmigen Einspritzdüse (43) kommenden Brennstoff vermischen soll, die Form eines Kegelstumpfs hat, dergestalt dass der Durchmesser des mittleren Querschnitts dieses ringförmigen Zwischenraums (53) von vorne nach hinten, bezogen auf die Strömungsrichtung dieses letzteren Luftstroms, abnimmt.

5. Einspritzsystem nach einem der Ansprüche 1 bis 4,
**dadurch gekennzeichnet,**
**dass** durch den äußeren Ringkanal (30) schrägstehende Rippen (34) verlaufen, die dazu bestimmt sind, den in diesen Kanal (30) zugeführten Luftstrom in eine Drehbewegung zu versetzen.

6. Ringförmige Brennkammer für Turbotriebwerke,
**dadurch gekennzeichnet,**
**dass** sie mindestens ein Einspritzsystem (62) nach einem der vorherigen Ansprüche aufweist.

7. Turbotriebwerk,
**dadurch gekennzeichnet,**
**dass** es eine ringförmige Brennkammer nach Anspruch 6 aufweist.

## Claims

1. An air and fuel injection system (62) for the back end wall (16) of a turbomachine's annular combustion chamber, including an internal channel (29), an external annular channel (30), a peripheral annular channel (52), two annular walls (36, 38), and at least two coaxial fuel injecting devices (26, 43), among which a central injector (26) associated with two air admission channels, namely the internal channel (29) in which the central injector (26) emerges such that fuel sprayed by the central injector (26) can be immediately mixed with air admitted in the internal channel (29), and the external annular channel (30) formed around the annular wall (36) separating it from the internal channel (29) and emerging downstream in the injection system to allow subsequent enrichment of the air-fuel mixture with air, together with a peripheral annular injector (43) including at least one fuel ejection aperture (44) made in the annular wall (38) and emerging in the peripheral annular channel (52) separated from said external channel (30) by said annular wall (38), and having an annular space (53) of admission of an air stream intended to mix in said peripheral annular channel (52) with fuel delivered by said peripheral injector (43), wherein said annular wall (36), which separates said external annular channel (30) and said internal channel (29), has on its internal face a convergent-divergent profile intended for aspiration by a venturi effect of a film of fuel from said central injector (26), and said annular wall (36) has at its downstream end an annular lip (37) for spraying said fuel film under the effect of a flow of the stream of air admitted into the external annular channel (30), where said injection system (62) is **characterised in that** it also includes multiple air ejection apertures (64) traversing said annular wall (38) downstream from said fuel ejection aperture (44) with respect to the flow of said air stream, for an additional injection of air from said external channel (30) into said peripheral annular channel (52).

2. An injection system according to claim 1, **characterised in that** said peripheral annular injector (43) includes a plurality of fuel ejection apertures (44) provided in said annular wall (38) and emerging in said peripheral annular channel (52), and **in that** each of said air ejection apertures (64) emerges on the predetermined path of a fuel trickle (60) which may, in operation, drip on said annular wall (38) from a corresponding fuel ejection aperture (44) of said plurality of fuel ejection apertures (44).

3. An injection system according to claim 2, **characterised in that** it includes oblique fins (54), which traverse said annular space (53) of admission of said air stream, giving this air stream a swirling motion, the orientation of which determines the path of said fuel trickles (60).

4. An injection system according to any of the claims 1 to 3, **characterised in that** said annular space (53) of admission of said air stream is tapered in shape, such that the diameter of the average transverse section of said space (53) reduces from upstream to downstream in reference to the flow of said air stream.

5. An injection system according to any one of claims 1 to 4, **characterised in that** said external annular channel (30) is traversed by oblique fins (34) intended to give the air stream admitted into this channel (30) a swirling motion.

6. An annular combustion chamber for a turbomachine, **characterised in that** it includes at least one injection system (62) according to any of the previous claims.

7. A turbomachine, **characterised in that** it includes an annular combustion chamber according to claim 6.
